# EUROPÄISCHE PATENTSCHRIFT

(11) **EP 2 107 222 B1**
(45) Veröffentlichungstag und Bekanntmachung des Hinweises auf die Patenterteilung: **08.11.2017**
(21) Anmeldenummer: 08016601.0
(22) Anmeldetag: 20.09.2008
(51) Int. Cl.: F01N 3/023, F01N 3/031, F01N 3/035, F01N 3/08, F01N 3/20

(54) **Verfahren zur Anhebung des Stickstoffdioxidanteils im Abgas**
Method for increasing the nitrogen dioxide portion of waste gas
Procédé d'accentuation de la part de dioxyde d'azote dans les gaz d'échappement

(30) Priorität: 04.04.2008 DE 102008017279
(43) Veröffentlichungstag der Anmeldung: 07.10.2009
(73) Patentinhaber: MAN Truck & Bus AG, 80995 München (DE)
(72) Erfinder: Döring, Andreas, 82008 München (DE)
(74) Vertreter: v. Bezold & Partner Patentanwälte - PartG mbB

(56) Entgegenhaltungen:
- EP-A- 1 892 395
- EP-A2- 1 900 916

## Beschreibung

Gegenstand der Erfindung ist ein Verfahren zur Anhebung des Stickstoffdioxidanteils im Abgas einer Brennkraftmaschine stromauf eines SCR-Systems zur selektiven katalytischen Reduktion von Stickoxiden mit Hilfe von Ammoniak und/oder ammoniakabspaltenden Reduktionsmitteln.

Auf Grund der immer strengeren Abgasgrenzwerte, die nicht mehr allein durch motorische Maßnahmen zu erreichen sind, werden die meisten Brennkraftmaschinen inzwischen mit Nachbehandlungssystemen zur Verminderung der Schadstoffemissionen ausgerüstet.

Neben Feststoffpartikeln gehören Stickoxide zu den limitierten Abgaskomponenten, die während Verbrennungsvorgängen entstehen und deren erlaubte Emissionen immer weiter abgesenkt werden. Zur Minimierung dieser Abgaskomponenten bei in Kraftfahrzeugen betriebenen Brennkraftmaschinen werden heute unterschiedliche Verfahren eingesetzt. Die Verringerung der Stickoxide geschieht meist mit Hilfe von Katalysatoren, in sauerstoffreichem Abgas ist zusätzlich ein Reduktionsmittel erforderlich, um die Selektivität und die NO_{X} -Umsätze anzuheben. Bekannt geworden sind diese Verfahren unter dem Sammelbegriff SCR-Verfahren, wobei SCR für "selektive katalytische Reduktion" steht. Ihr Einsatz erfolgt seit vielen Jahren im Kraftwerksbereich und in jüngster Zeit auch bei Brennkraftmaschinen. Eine ausführliche Darstellung solcher Verfahren ist der DE 34 28 232 A1 zu entnehmen. Als SCR-Katalysatoren können V₂O₅-haltige Mischoxide, beispielsweise in der Form V₂O₅/WO₃/TiO₂, verwendet werden. Typische V₂O₅-Anteile liegen dabei zwischen 0,2-3%. Als Reduktionsmittel kommen in der praktischen Anwendung Ammoniak oder Ammoniak abspaltende Verbindungen, wie Harnstoff oder Ammoniumformiat, in fester oder Lösungsform zum Einsatz. Die Zersetzung dieser Stoffe und damit die Freisetzung von Ammoniak ist beim SCR-Verfahren ausschlaggebend für die Einsetzbarkeit des Verfahrens.

(NH₂)₂CO+H₂O → 2NH₃+CO₂ (1)

Da beispielsweise die Zersetzung von Harnstoff nach Gleichung 1 in der Gasphase erst bei 450°C quantitativ gelingt, werden oft sogenannte Hydrolyse- oder Harnstoffzersetzungskatalysatoren (EP0487886B1 und EP0555746B1) eingesetzt, bei denen die Zersetzungstemperaturen auf ca. 170°C abgesenkt werden können. Sie beschleunigen die Hydrolyse der, bei der Harnstoffzersetzung durch Thermolyse freigesetzten, Isocyansäure zu NH₃ und CO₂.

(NH₂)₂CO → NH₃+HNCO (2)

HNCO+H₂O → NH₃+CO₂ (3)

Als Aktivkomponenten kommen TiO₂ und/oder SiO₂ und/oder Al₂O₃ und/oder Zeolithe zum Einsatz. Um die Katalysatoren zu verkleinern, aber die Verweilzeit in den Katalysatoren konstant zu lassen, werden die Hydrolysekatalysatoren oft in einem Abgasteilstrom betrieben, der dem Hauptstrom entnommen wird (EP1052009B1). Besonders vorteilhaft ist es dabei, den Abgasteilstrom möglichst motornah zu entnehmen, um den Hydrolysekatalysator auf einem hohen Temperaturniveau betreiben zu können.

Bei abgasaufgeladenen Brennkraftmaschinen ist es vorteilhaft, den Abgasteilstrom bereits vor dem Turbolader zu entnehmen und ihn stromab des Turboladers wieder zurückzuführen (DE10206028A1, DE19855384A1, DE19960976A1).

Für die Umsetzung von einem Mol Stickstoffmonoxid ist beim SCR-Verfahren ein Mol Ammoniak notwendig.

4NO+4NH₃+O₂ ⇒ 4N₂ +6H₂O (4)

Wird den SCR-Katalysatoren ein platinhaltiger NO-Oxidationskatalysator zur Bildung von NO₂ vorgeschaltet

2NO+O₂ ⇔ 2NO₂ (5)

so kann die SCR-Reaktion erheblich beschleunigt und die Tieftemperaturaktivität merklich angehoben werden (EP1054722, JP2000225323, US20020064956).

NO+2NH₃+NO₂ ⇒ 2N₂+3H₂O (6)

Bei in Fahrzeugen betriebenen Brennkraftmaschinen gestaltet sich die Stickoxidreduzierung mit Hilfe des SCR-Verfahrens deshalb schwierig, weil dort wechselnde Betriebsbedingungen vorliegen, was die mengenmäßige Zumessung des Reduktionsmittels erschwert. Es soll zwar einerseits ein möglichst hoher Umsatz an Stickoxiden erreicht werden, andererseits ist aber darauf zu achten, dass es nicht zur Emission von unverbrauchtem Ammoniak kommt. Um hier Abhilfe zu schaffen, wird häufig ein, dem SCR-Katalysator nachgeordneter, AmmoniakSperrkatalysator eingesetzt, der überschüssigen Ammoniak zu Stickstoff und Wasserdampf umsetzt.

Bei hohen Abgastemperaturen gestaltet sich der Einsatz von V₂O₅ als SCR-Aktivkomponente kritisch. Der Grund hierfür liegt in der geringen thermischen Stabilität dieser Katalysatoren. So kommt es bei Abgastemperatur von über 650°C zur Sublimation von V₂O₅. Für diese Hochtemperaturanwendungen werden V₂O₅-freie, übergangsmetallhaltige, insbesondere eisen-, kobalt- oder kupferhaltige, Katalysatoren eingesetzt. Als besonders vorteilhaft hat es sich in diesem Zusammenhang erwiesen, diese Übergangsmetalle durch Ionenaustauch in Zeolithe zu integrieren (DE 3 912 596 C2). Auf Grund der sehr großen Oberfläche der Zeolithe gelingt dadurch eine erhebliche Vergrößerung der aktiven Oberfläche und damit eine deutliche Steigerung der erreichbaren Umsätze.

Wie bereits oben beschrieben, hängen die erreichbaren NO_{X}-Umsätze bei tiefen Temperaturen entscheidend vom Anteil von Stickstoffdioxid an den Gesamtstickoxiden ab. Dabei hat sich ein NO₂-Anteil von 50% als optimal erwiesen. Das für diese Technologien notwendige NO₂ wird dabei an platinhaltigen und/oder zeolithhaltigen NO-Oxidationskatalysatoren aus dem vom Motor emittierten Stickstoffmonoxid gebildet. Der Nachteil besteht allerdings darin, dass diese Katalysatoren recht groß ausgeführt werden müssen, um ausreichend hohe Verweilzeiten sicherzustellen, durch die entsprechend große Mengen NO zu NO₂ oxidiert werden können. Zudem sind sie auf Grund ihrer hohen Edelmetallbeladung sehr teuer.

Aus der EP 1 892 395 A1 ist ein Abgasnachbehandlungssystem zur Stickoxid- und Partikelreduzierung bei mit Luftüberschuss betriebenen Brennkraftmaschinen bekannt, wobei die Stickoxidreduzierung mittels eines SCR-Katalysators und die Partikelreduktion mittels eines Partikelabscheiders oder eines Partikelfilters erfolgt, und wobei im Abgasstrom der Brennkraftmaschine ein Oxidationskatalysator angeordnet ist, der zumindest einen Teil des im Abgasstrom enthaltenen Stickstoffmonoxids in Stickstoffdioxid überführt. Weiter ist stromab zum Oxidationskatalysator ein erster Partikelabscheider oder Partikelfilter im Abgasstrom angeordnet, der die im ersten Partikelabscheider oder Partikelfilter angelagerten Rußpartikel mit Hilfe des im Abgasstrom enthaltenen Stickstoffdioxids in Kohlenmonoxid, Kohlendioxid, Stickstoff und Stickstoffmonoxid umsetzt. Stromauf zum ersten Partikelabscheider oder Partikelfilter zweigt ein Abgasteilstrom vom Abgasstrom ab. Weiter sind ein Vorratsbehälter für ein Reduktionsmittel und eine Zumesseinrichtung für das Reduktionsmittel vorgesehen sind, wobei die Zumesseinrichtung das Reduktionsmittel in den Abgasteilstrom zugibt. Bei dem Reduktionsmittel handelt es sich um einen stromab der Zuführstelle durch das heiße Abgas Ammoniak abspaltenden Stoff oder um Ammoniak. Stromab zu der Zuführstelle ist ein zweiter Partikelabscheider oder Partikelfilter im Abgasteilstrom angeordnet und der Abgasteilstrom ist stromab zum zweiten Partikelabscheider oder Partikelfilter und stromab zum erster Partikelabscheider oder Partikelfilter in den Abgasstrom zurückgeführt. Schließlich ist stromab zur Rückführstelle ein SCR-Katalysator angeordnet ist, der die im Abgasstrom enthaltenen Stickoxide mit Hilfe des abgespaltenen Ammoniaks im Wege der selektiven katalytischen Reduktion zu Stickstoff und Wasserdampf reduziert.

Das Dokument EP 1 900 916 A2 beschreibt ein Abgasnachbehandlungssystem mit Stickoxidreduzierung bei einer mit Luftüberschuss betriebenen Brennkraftmaschine. Stromauf eines SCR-Katalysators zweigt ein Abgasteilstrom vom Abgasstrom ab. Eine Zumesseinrichtung gibt das Reduktionsmittel in den Abgasteilstrom zu. Der Abgasteilstrom wird stromab der Zuführstelle und stromauf zum SCR-Katalysator in den Abgasstrom zurückgeführt. Bei bestimmten Betriebszuständen der Brennkraftmaschine, insbesondere im Bremsbetrieb, kann eine Umkehr der Strömungsrichtung des Abgases eintreten. Um in solchen Fällen zu verhindern, dass Reduktionsmittel, aus dem Reduktionsmittel abgespaltener Ammoniak oder aus dem Reduktionsmittel gebildete Nebenprodukte (beispielsweise Isocyansäure) durch Rückströmung oder Diffusion in Richtung Motorblock mit abgasberührten Teilen des Motors in Kontakt kommen, ist im Abgasteilstrom stromauf zur Zuführstelle für das Reduktionsmittel ein Oxidationskatalysator angeordnet. Dieser ist hinsichtlich seiner Aktivkomponenten so ausgelegt, dass er zurückströmendes Reduktionsmittel, aus dem Reduktionsmittel abgespaltenen Ammoniak oder aus dem Reduktionsmittel gebildete Nebenprodukte oxidiert. Bei der Oxidation von Ammoniak ist eine selektive Reaktion bis zur Oxidationsstufe 0 angestrebt. Falls dies nicht immer selektiv gelingt, ist stromab zum Oxidationskatalysator und stromauf zur Zuführungsstelle für das Reduktionsmittel im Abgasnebenstrom ein weiterer SCR-Katalysator angeordnet.

Das erfindungsgemäße Verfahren ermöglicht es in vorteilhafter Weise, das für die NO-Oxidation benötigte Katalysatorvolumen und die eingesetzte Edelmetallmenge zu verringern. Gelöst wird die Aufgabe durch ein Verfahren gemäß dem Kennzeichen des Anspruches 1, vorteilhafte Weiterbildungen des erfindungsgemäßen Verfahrens sind in den abhängigen Ansprüchen gekennzeichnet.

Der Grundgedanke der Erfindung besteht darin, den NO₂-Anteil, durch Verringerung der NO-Konzentration einerseits und durch Anheben der Verweilzeit in dem oder den NO-Oxidationskatalysatoren andererseits, zu erhöhen. Hierfür wird der Abgasstrom stromauf eines Haupt-SCR-Katalysators in mindestens zwei Abgasteilströme aufgeteilt. Im ersten Abgasteilstrom wird mindestens ein NO-Oxidationskatalysator zur Bildung von NO₂ aus motorgeneriertem NO angebracht. Durch die Aufteilung in z.B. zwei Abgasteilströme sinkt der Volumenstrom über diesen NO-Oxidationskatalysator ab, was einen Anstieg der Verweilzeit zur Folge hat. Dies führt zu einem Anstieg der am NO-Oxidationskatalysator gebildeten NO₂-Mengen.

Zusätzlich wird im zweiten Abgasteilstrom ein Teilstrom-SCR-Katalysator integriert. Stromauf dieses Teilstrom-SCR-Katalysators wird Ammoniak und/oder ammoniakabspaltendes Reduktionsmittel zugegeben. Dies führt zu einer Reduktion der vom Motor emittierten Stickoxide, insbesondere des hauptsächlich vorhandenen Stickstoffmonoxids. Anschließend werden die beiden Abgasteilströme wiederzusammengefasst und der Abgasstrom sodann über die nachgeschalteten Nachbehandlungssysteme, insbesondere einen Haupt-SCR-Katalysator und/oder einen NOx-Speicherkatalysator und/oder Partikelfilter und/oder Partikelabscheider geleitet.

Die nachfolgende Tabelle soll die Vorteile das erfindungsgemäße Verfahren verdeutlichen, aufgezeigt sind der Stand der Technik und das erfindungsgemäße Verfahren in Gegenüberstellung. Bei Stand der Technik wird die gesamte Abgasmenge mit 500kg/h über den NO-Oxidationskatalysator, in der Tabelle als NO-Kat bezeichnet, geführt, während beim erfindungsgemäßen Verfahren der Abgasstrom in zwei, hier gleich große, Abgasteilströme aufgeteilt ist, wobei der erste Abgasteilstrom über einen NO-Oxidationskatalysator und der zweite Abgasteilstrom über einen Teilstrom-SCR-Katalysator, in der Tabelle als SCR-Kat bezeichnet, geleitet wird. Bei dieser ersten Gegenüberstellung wurde das Volumen des NO-Oxidationskatalysators im Vergleich zum Stand der Technik mit 5 Litern gleichgelassen, das SCR-Volumen beträgt mit 2,5 Liter 50% des NO-Oxidationsvolumens. Bei beiden dargestellten Varianten beträgt die NO_{X}- und NO-Konzentration vor den Katalysatoren 1000ppm. Durch Oxidation des NO an dem Oxidationskatalysator ergibt sich stromab zu diesem eine NO₂-Konzentration von 300ppm für den Stand der Technik, nach dem erfindungsgemäßen Verfahren, auf Grund der höheren Verweilzeit, dagegen eine NO₂-Konzentration 500ppm. Durch den im zweiten Abgasteilstrom angeordneten SCR-Katalysator gelingt eine Absenkung der NO-Konzentration in diesem Abgaszweig auf 50ppm. Dadurch ergibt sich beim erfindungsgemäßen Verfahren nach der Zusammenführung der beiden Abgasteilströme eine NO_{X}-Konzentration von 525ppm und eine NO-Konzentration von 275ppm, was einem NO₂-Anteil von 48% entspricht. Dies liegt erheblich über dem mit dem Stand der Technik erreichbaren NO₂-Anteil von 30%.

| | Stand der Technik | | Erfindungsgemäßes Verfahren |
|---|---|---|---|
| Massenstrom über NO-Kat [kg/h] | 500 | | 250 |
| Volumen NO-Kat [l] | 5 | | 5 |
| Massenstrom über SCR-Kat [kg/h] | entfällt | | 250 |
| Volumen SCR-Kat [l] | entfällt | | 2,5 |
| Konzentration NO vor NO-Kat/SCR-Kat [ppm] | 1000 | | 1000 |
| Konzentration NO₂ nach NO-Kat [ppm] | 300 | | 500 |
| Konzentration NO₂ nach SCR-Kat [ppm] | entfällt | | 0 |
| Konzentration NOx nach SCR-Kat [ppm] | entfällt | | 50 |
| Konzentration NOx nach System [ppm] | 1000 | | 525 |
| Konzentration NO nach System [ppm] | 700 | | 275 |
| **NO₂-Anteil [%]** | **30** | | **48** |

Die nachfolgende Tabelle zeigt die Verhältnisse, wenn die Verweilzeit in dem NO-Oxidationskatalysator des erfindungsgemäßen Verfahrens identisch zu der nach dem Stand der Technik ist. Hierfür wird das Volumen der NO-Oxidationskatalysatoren halbiert, beträgt also nur noch 2,5 Liter. Dadurch ergeben sich stromab der beiden Oxidationskatalysatoren identische NO₂-Konzentrationen. Durch Absenkung der NO-Konzentration beim erfindungsgemäßen Verfahren ergeben sich nach den beiden Systemen nahezu identische NO-Anteile von 30% bzw. 29%

| | Stand der Technik | | Erfindungsgemäßes Verfahren |
|---|---|---|---|
| Massenstrom über NO-Kat [kg/h] | 500 | | 250 |
| Volumen NO-Kat [l] | 5 | | 2,5 |
| Massenstrom über SCR-Kat [kg/h] | entfällt | | 250 |
| Volumen SCR-Kat [l] | entfällt | | 2,5 |
| Konzentration NO vor NO-Kat [ppm] | 1000 | | 1000 |
| Konzentration NO₂ nach NO-Kat [ppm] | 300 | | 300 |
| Konzentration NO₂ nach SCR-Kat [ppm] | entfällt | | 0 |
| Konzentration NOx nach SCR-Kat [ppm] | entfällt | | 50 |
| Konzentration NOx nach System [ppm] | 1000 | | 525 |
| Konzentration NO nach System [ppm] | 700 | | 375 |
| **NO₂-Anteil [%]** | **30** | | **29** |

Durch die Halbierung des Volumens für den NO-Oxidationskatalysatoren verringert sich die eingesetzte Edelmetallmenge ebenfalls um die Hälfte, was zu erheblich niedrigeren Gesamtkosten führt.

Für die Einsetzbarkeit des Verfahrens ist es essentiell, dass an dem, im zweiten Abgasteilstrom angeordneten, Teilstrom-SCR-Katalysator hohe NO-Umsätze generiert werden. Da die erreichbaren Umsätze mit steigender Temperatur ansteigen, ist es vorteilhaft, den Teilstrom-SCR-Katalysator möglichst motornah zu platzieren. Bei abgasaufgeladenen Motoren liegen die Temperaturen stromauf der Abgasturbine bis zu 350°C über denen nach der Turbine. Daher bietet es sich an, den Abgasteilstrom für den Teilstrom-SCR-Katalysator stromauf der mindestens einer Abgasturbine zu entnehmen, über den Teilstrom-SCR-Katalysator zu leiten und stromab des NO-Oxidationskatalysators sowie stromauf des Haupt-SCR-Katalysators wieder zurückzuführen.

Da der Teilstrom-SCR-Katalysator und der Haupt-SCR-Katalysator auf unterschiedlichen Temperatur- und NO₂-Niveaus betrieben werden, werden vorteilhaft unterschiedliche Katalysatortypen eingesetzt. So werden auf Grund der hohen Temperaturen im zweiten Abgasteilstrom für den Teilstrom-SCR-Katalysator vorteilhaft eisen- und/oder kupfer- und/oder kobalthaltige Zeolihte eingesetzt, während für den Haupt-SCR-Katalysator als Aktivkomponenten auch Vanadium und/oder Wolfram und/oder Titan und/oder deren Oxide denkbar sind.

Wird als Reduktionsmittel nicht Ammoniak, sondern ein ammoniakabspaltender Stoff, insbesondere Harnstoff oder Harnstofflösung verwendet, ist die Anordnung eines Katalysators zur Zersetzung des Reduktionsmittels zwischen der Zuführungsstelle für das Reduktionsmittel und dem Teilstrom-SCR-Katalysator sinnvoll. Als Aktivkomponenten für diesen Zersetzungskatalysator kommen Titan und/oder Silizium und/oder Vanadium und/oder Wolfram und/oder deren Oxide und/oder Zeolithe in Frage.

Für den im ersten Abgasteilstrom angeordneten NO-Oxidationskatalysator lassen sich vorteilhaft Platin und/oder dessen Oxide und/oder Zeolithe als Aktivmaterialien einsetzen.

Um hohe NO_{X}-Umsätze am Haupt-SCR-Katalysator darstellen zu können, sind ausreichend hohe Reduktionsmittelmengen notwendig. Im einfachsten Fall wird dies über die stromauf des Teilsstrom-SCR-Katalysators angeordnete Zumesseinheit realisiert, indem mehr Reduktionsmittel zudosiert wird, als am Teilstrom-SCR-Katalysator benötigt wird. Dies hat zur Folge, das nicht umgesetztes Reduktionsmitteln den Teilstrom-SCR-Katalysator passiert und an die Haupt-SCR-Katalysatoren gelangt, wodurch an diesen ein NO_{X}-Umsatz möglich wird.
Eine zweite vorteilhafte Möglichkeit besteht darin, ein zweite, stromab des Teilstrom-SCR-Katalysators angeordnete, Zumesseinrichtung für das Reduktionsmittel vorzusehen. Dies bietet den Vorteil, dass die Menge an Reduktionsmittel, die über den Teilstrom-SCR-Katalysator strömt, variiert werden kann, wodurch sich wiederum die NO₂-Anteile frei und unabhängig von den NO_{X}-Umsätzen am Haupt-SCR-Katalysator einstellen lassen.

Nachfolgend wird die Erfindung mit Hilfe der Zeichnungen anhand einiger Beispiele näher erläutert, es zeigen:
- Fig. 1: Ein Abgasnachbehandlungssystem mit Aufteilung des Abgasstroms
- Fig. 2: Ein erstes SCR-System mit Teilstrom-SCR-Katalysator und NO-Oxidationskatalysator zur Anhebung des NO₂-Anteils
- Fig. 3: Ein zweites SCR-System mit Teilstrom-SCR-Katalysator, Teilstrom-Hydrolysekatalysator und NO-Oxidationskatalysator
- Fig. 4: Ein Abgasnachbehandlungssystem mit Teilstrom-SCR-Katalysator, Teilstrom-Hydrolysekatalysator und NO-Oxidationskatalysator und Turbolader

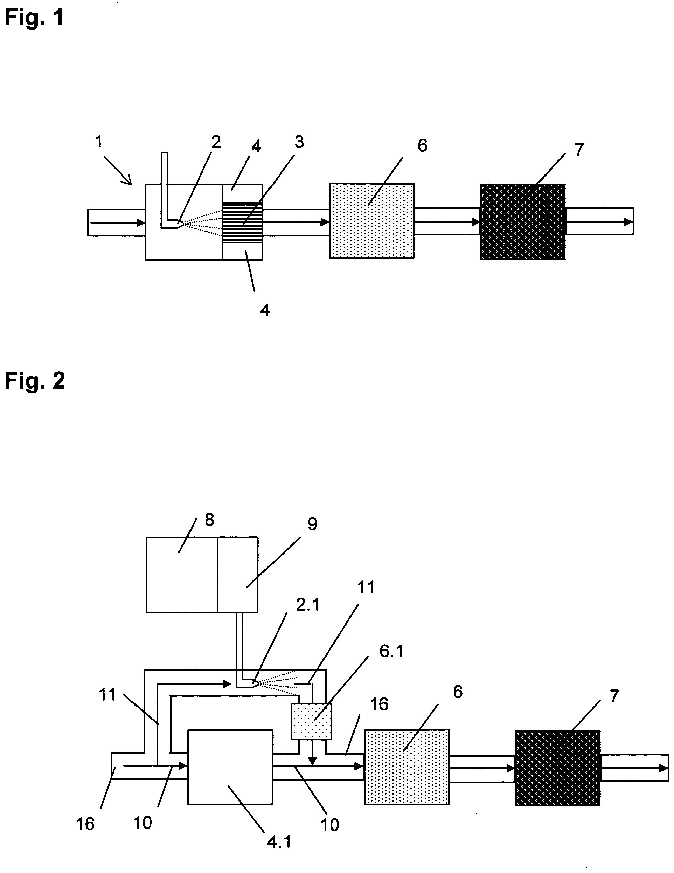

Zur Erläuterung der Zusammenhänge ist zunächst, in Fig. 1 schematisch dargestellt, eine Anordnung nach dem Stand der Technik gezeigt, mit der Stickoxide im Wege der selektiven katalytischen Reduktion aus dem Abgas einer Brennkraftmaschine entfernt werden.

Die von einer Brennkraftmaschine (nicht dargestellt) durch die Verbrennungsvorgänge erzeugten Abgase, in Fig. 1 durch die Pfeile symbolisiert, gelangen zunächst in einen Abgasaufbereitungstrakt 1, in welchem der Abgasstrom in einen mengenmäßig kleineren und einen größeren Abgasteilstrom aufgeteilt wird. In den mengenmäßig kleineren Abgasteilstrom wird dem heißen Abgas ein Reduktionsmittel möglichst motornah beigegeben. Bei dem Reduktionsmittel handelt es sich, wie bei Kraftfahrzeugen mit SCR-Katalysator in der Praxis gebräuchlich, um eine wässrige Harnstofflösung, selbstverständlich ist aber auch die Zugabe von Harnstoff in fester Form denkbar, wie dies in der einschlägigen Fachliteratur bereits ausführlich beschrieben ist. Weiter ist es möglich, als Reduktionsmittel Ammoniak zuzugeben, der an anderer Stelle, z.B. unter günstigeren thermischen Bedingungen, aus einem Ammoniak abspaltenden Stoff gewonnen wird. Die Zumessung erfolgt in Abhängigkeit von Betriebsparametern der Brennkraftmaschine, gesteuert über eine Motorsteuereinheit (nicht dargestellt), in der Weise, dass über eine Düse 2 die wässrige Harnstofflösung unmittelbar vor einem Hydrolysekatalysator 3 in den Abgasteilstrom eingesprüht wird. Die Aufgabe des Hydrolysekatalysators 3 ist es, die wässrige Harnstofflösung unter Vermeidung von Nebenprodukten möglichst vollständig in Ammoniak und Wasserdampf überzuführen. Unter bestimmten Voraussetzungen erfolgt diese Aufspaltung auch ohne Hydrolysekatalysator hinreichend, so dass dieser dann entfallen kann.

Parallel zum Hydrolysekatalysator 3 ist in dem mengenmäßig größeren Abgasteilstrom ein NO-Oxidationskatalysator 4 angeordnet, dessen Aufgabe darin besteht, nach der vorstehend mit (5) bezeichneten Reaktion einen möglichst großen Teil des im Abgas enthaltenen Stickstoffmonoxids mittels des im Abgas vorhandenen überschüssigen Sauerstoffes zu Stickstoffdioxid aufzuoxidieren.

Die Abgasteilströme werden stromab zu Hydrolysekatalysator und NO-Oxidationskatalysator wieder zusammengeführt.

Die eigentliche selektive katalytische Reduktion der Stickoxide erfolgt in stromab zum Hydrolysekatalysator 3 bzw. NO-Oxidationskatalysator gelegenen Haupt-SCR-Katalysator 6, der einen möglichst großen Anteil der im Abgas vorhandenen Stickoxide (NO_{X}) bei gleichzeitiger hoher Selektivität der Reduktion in Stickstoff und Wasserdampf überführt, ohne dass überschüssiger Ammoniak (NH₃) im Abgasstrom verbleibt. Bei der angesprochenen SCR-Reaktion ist das im Abgasstrom vorhandene Stickstoffdioxid reaktionsfreudiger als das im Abgas enthaltene Stickstoffmonoxid, es ist demnach wünschenswert, den NO-Oxidationskatalysator 4 so auszulegen, dass ein möglichst hoher Anteil an Stickstoffmonoxid in Stickstoffdioxid übergeführt wird.

In Anbetracht der ständig wechselnden Betriebsbedingungen einer in einem Kraftfahrzeug betriebenen Brennkraftmaschine ist offensichtlich, dass die gewünschte möglichst hohe Umsetzungsrate an Stickoxiden nur dann sicher gelingen kann, wenn ein geringfügiger Ammoniaküberschuss in Kauf genommen wird. Um in Fällen ungenügender Umsetzung zu verhindern, dass giftiger Ammoniak mit dem teilgereinigten Abgas an die Außenluft abgegeben wird, ist dem SCR-Katalysator 6 ein NH₃-Oxidationskatalysator 7 nachgeordnet, mit dem das überschüssige NH₃ in Stickstoff und Wasserdampf übergeführt wird. Diese Oxidationsreaktion sollte möglichst selektiv ablaufen.

Wie bereits weiter oben angedeutet, kann dann, wenn das Temperaturniveau an der Zuführstelle für das Reduktionsmittel über den gesamten Betriebsbereich hoch ist, auf den Hydrolysekatalysator 3 verzichtet werden.

Ein Ausführungsbeispiel für das erfindungsgemäße Abgasnachbehandlungssystem ist in Fig. 2 gezeigt.

Die Anordnung zeigt eine Aufteilung des von einer Brennkraftmaschine (nicht dargestellt) kommenden Abgasstroms 16 in einen ersten Abgasteilstrom 10 und einen zweiten Abgasteilstrom 11, wobei beiden Abgasteilströme mengenmäßig gleich groß gewählt sein können. In den zweiten Abgasteilstrom 11 wir das Reduktionsmittel, in diesem Beispiel wässrige Harnstofflösung, auch unter dem Handelsnamen AdBlue bekannt, beigegeben. Die Zumessung erfolgt durch eine in Abhängigkeit von Betriebsparametern der Brennkraftmaschine gesteuerte Zumesseinrichtung 9, die die wässrige Harnstofflösung aus einem Vorratsbehälter 8 entnimmt und über eine Düse 2.1, je nach Betriebszustand der Brennkraftmaschine, in vorgegebenen Mengen in den Abgasstrom einspritzt. Stromab zur Zuführstelle ist ein Teilstrom-SCR-Katalysator 6.1 im zweiten Abgasteilstrom 11 angeordnet, der, wie weiter oben bereits ausgeführt, die NO-Konzentration im zweiten Abgasteilstrom 11 stark absenkt.

Hinsichtlich der Menge der mittels der Düse 2.1 in den zweiten Abgasteilstrom 11 eingespritzten wässrigen Harnstofflösung ist anzumerken, dass diese, sowohl für die Reaktion im Teilstrom-SCR-Katalysator, als auch für die Reaktion im stromab zu diesem, im Abgasstrom 16 angeordneten Haupt-SCR-Katalysator 6, ausreichend bemessen ist.

Im erstem Abgasteilstrom 10 ist parallel zum Teilstrom-SCR-Katalysator 6.1 ein NO-Oxidationskatalysator 4.1 angeordnet. Er dient der Anhebung des Anteils von Stickstoffdioxid im Abgasteilstrom 11, wie dies bereits oben ausgeführt ist.

Die vorstehend beschriebenen Anordnung hat zwei wesentliche Effekte. Einerseits wird durch die mengenmäßige Halbierung des Abgasstroms - das gleiche Volumen des NO-Oxidationskatalysators vorausgesetzt, wie es verwendet würde, wenn das erfindungsgemäße Verfahren nicht zur Anwendung käme - die Verweilzeit des Abgases im NO-Oxidationskatalysator stark erhöht, so dass ein höherer Anteil der über den NO-Oxidationskatalysator 4.1 geführten Stickoxidmenge in Stickstoffdioxid umgewandelt werden kann. Andererseits erfolgt durch die selektive katalytische Reduktion im Teilstrom-SCR-Katalysator 6.1 eine Verringerung des NO_{X}-Anteils im zweiten Abgasteilstrom 11, derart, dass dieser nahezu frei von Stickoxiden ist.

Die Zusammenführung des nunmehr nahezu NO-freien Abgasteilstroms 11 mit dem ersten Abgasteilstrom 10 dessen NO₂-Anteil gegenüber dem NO-Anteil deutlich angehoben wurde, erfolgt stromab zum Teilstrom-SCR-Katalysator 6.1 bzw. NO-Oxidationskatalysator 4.1. Durch die Zusammenführung beider Abgasteilströme 10 und 11 ergibt sich hinsichtlich der Abgaszusammensetzung, bei insgesamt reduzierter Stickoxidmenge, ein, gegenüber dem Stickstoffmonoxidanteil wesentlich höherer Anteil an Stickstoffdioxid.

Der stromab zur Zusammenführung der Abgasteilströme 10, 11 im Abgasstrom 16 angeordneten Haupt-SCR-Katalysaror 6, sowie der nachgeordnete NH₃-Oxidationskatalysator 7 sind identisch mit den bereits in Figur 1 beschriebenen, so dass sich eine nochmalige Beschreibung ihrer Funktion erübrigt, es wird stattdessen auf die einschlägigen Beschreibungsteile zur Figur 1 verwiesen.

Da die SCR-Reaktion bei hohen Temperaturen beschleunigt abläuft, ist es vorteilhaft, den Teilstrom-SCR-Katalysator 6.1 motornah anzuordnen.

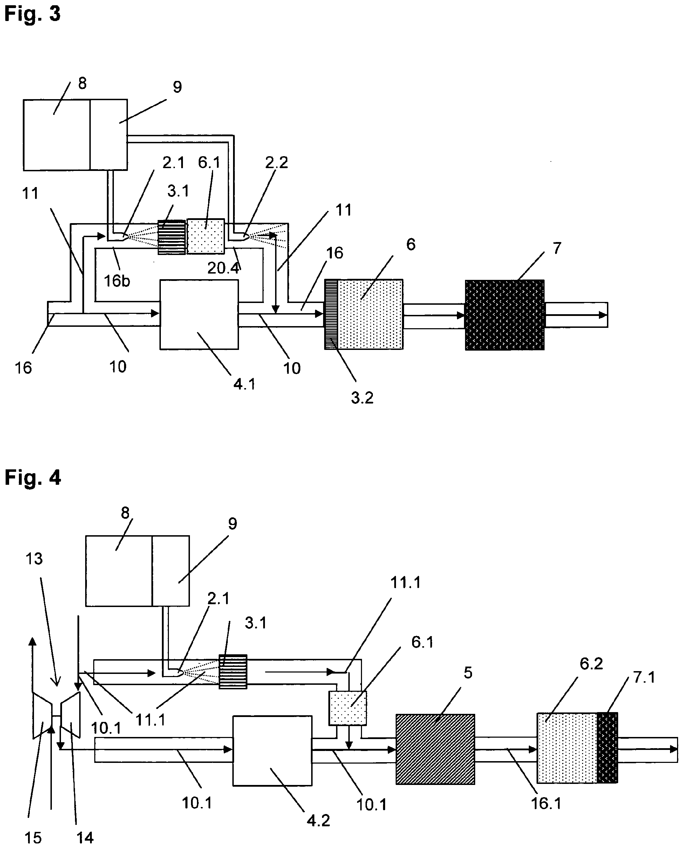

In Fig. 3 ist eine Anordnung, ähnlich der in Verbindung mit der Figur 2 beschriebenen, gezeigt. Es ist lediglich zur Zersetzung des Reduktionsmittels zusätzlich im Teilstrom 11 und stromauf des Teilstrom-SCR-Katalysators 6.1 ein Zersetzungs- oder Hydrolysekatalysator 3.1 angebracht, der die Freisetzung von Ammoniak aus dem Reduktionsmittel begünstigt. Die Zumessung der wässrigen Harnstofflösung mittels der Düse 2.1 erfolgt in diesem Beispiel so, dass die beigegebene Menge lediglich für die im Teilstrom-SCR-Katalysator 6.1 stattfindende Reaktion ausreichend bemessen ist. Die Zuführung der für die selektive katalytische Reduktion im Hauptstrom-SCR-Katalysator 6 notwendigen Menge an wässriger Harnstofflösung erfolgt über eine zweite Düse 2.2, die stromab zum Teilstrom-SCR-Katalysator im zweiten Abgasteilstrom 11 angeordnet ist. Zur Unterstützung der Überführung des mittels der zweite Düse 2.2 dem Abgas beigegebenen Reduktionsmittel in Ammoniak ist dem Haupt-CSR-Katalysator 6 ein weiterer Hydrolysekatalysator 3.2 vorgeordnet. Das kann beispielsweise dadurch realisiert werden, dass der Haupt-SCR-Katalysator auf seiner Eingangsseite mit einem die Hydrolyse begünstigenden Katalysatormaterial beschichtet ist.

Der Vorteil einer solchen Anordnung mit zwei Reduktionsmittelzuführungen 2.1, 2.2 besteht darin, dass die Menge an Reduktionsmittel, die über den Teilstrom-SCR-Katalysator 6.1 strömt, variiert werden kann, wodurch sich wiederum die NO₂-Anteile frei und unabhängig von den NO_{X}-Umsätzen am Haupt-SCR-Katalysator 6 einstellen lassen.

Da der übrige Aufbau des Beispiels nach Fig. 3 ansonsten identisch mit dem in Fig. 2 dargestellten ist, wird für die Beschreibung der übrigen Komponenten auf die Beschreibung der Fig. 2 verwiesen.

Bei heute in Fahrzeugen betriebenen Brennkraftmaschinen ist häufig eine wenigstens einstufige Turboladeranordnung vorhanden, die mit Hilfe der im Abgasstrom enthaltenen Abgasenthalpie, die der Brennkraftmaschine zugeführte Verbrennungsluft verdichtet. Für die Abgasnachbehandlung wirft dies deshalb Probleme auf, weil das über die Turbinen des oder der Abgasturbolader strömende Abgas durch diese zwangsläufig stark abgekühlt wird. Ein solchermaßen abgekühlter Abgasstrom ist insbesondere im Anfahrbetrieb und im unteren Teillastbereich nicht in der Lage, für die SCR-Reaktion im Abgasteilstrom ausreichende Abgastemperaturen zu erreichen. Selbst wenn Hydrolysekatalysatoren eingesetzt werden, reicht das Temperaturniveau zumeist nicht aus. Abhilfe für dieses Problem schafft die Anordnung nach Fig. 4. Wie dort gezeigt, verzweigt der von der Brennkraftmaschine (nicht dargestellt) kommende Abgasstrom bereits vor der Turbine 14 des Abgasturboladers 13 in der Weise, dass daraus ein zweiter Abgasteilstrom 11.1 entnommen wird, während der erste Abgasteilstrom 10.1 über die Turbine 14 geführt ist, über diese den Verdichter 15 antreibt und den Turbolader verlässt.

Die Hydrolyse des Reduktionsmittels erfolgt auch bei diesem Beispiel im Abgasteilstrom 11.1, dazu wird mit einer Dosiereinrichtung bestehend aus Vorratsbehälter 8, Zumesseinrichtung 9 und Düse 2.1 das Reduktionsmittel in Abhängigkeit von Betriebsparametern der Brennkraftmaschine in den zweiten Abgasteilstrom 11.1 zugeführt. Durch die im zweiten Abgasteilstrom 11.1 herrschende relativ hohe Abgastemperatur und den der Zuführstelle nachgeordneten Hydrolysekatalysator 3.1, kann das Reduktionsmittel ohne den Anfall problematischer Reaktionsprodukte, wie Cyanursäure, Ammoniak abspalten. Anschließend durchströmt das Abgas den im Abgasteilstrom 11.1 angeordneten Teilstrom-SCR-Katalysator 6.1, bevor es wieder mit dem ersten Abgasteilstrom 10.1, der über den Abgasturbolader 13 geführt wurde, zusammentrifft. Im Teil-SCR-Katalysator wird der Stickoxid-Anteil des Abgases, es handelt sich dabei hauptsächlich um Stickstoffmonoxid, durch die stattfindende selektive katalytische Reduktion stark vermindert.

Parallel zum zweiten Abgasteilstrom 11.1 wird der vom Abgasturboladers 13 kommende ersten Abgasteilstrom 10.1 über einen NO₂-Oxidationskatalysator 4.1 geführt, der, ebenso wie bei den vorhergehend beschriebenen Beispielen, im ersten Abgasteilstrom 10.1 enthaltenes Stickstoffmonoxid zu einem gewissen Prozentsatz zu Stickstoffdioxid oxidiert, Beispiele für erzielbare Stickstoffdioxid-Anteil stromab des NO₂-Oxidationskatalysator sind vorstehend für bestimmte Konfigurationen beschrieben und in Tabellen angegeben. Stromab zum NO₂-Oxidationskatalysator 4.1 erfolgt die Zusammenführung der Abgasteilströme 11.1 und 10.1 zum Gesamtabgasstrom 16.1.

Das aus dem zweiten Abgasteilstrom 11.1 kommende, stickoxidarme Abgas und das mit Stickstoffdioxid angereicherten Abgas aus dem ersten Abgasstrom 10.1 bilden nach dem Zusammenführen ein Abgasgemisch mit gegenüber den Vorgehensweise nach dem Stand der Technik stark erhöhtem Anteil an Stickstoffdioxid. Zu den erreichbaren Stickoxidanteilen bei gegebenen Abgasmengen und Katalysatorvolumina wird auf die vorstehend in Tabellen festgehaltenen Beispiele verwiesen. Das Abgas mit stark erhöhtem NO₂-Anteil durchströmt sodann einen, dem Rückführpunkt nachgeordneten Partikelabscheider/Partikelfilter 5, der einerseits für eine Durchmischung und homogene Verteilung der im Abgas enthaltenen Bestandteile sorgt und andererseits Rußpartikel aus dem Abgas anlagert, die mit Hilfe des im Oxidationskatalysatoren 4.1 erzeugten Stickstoffdioxids kontinuierlich zu Kohlenmonoxid, Kohlendioxid, Stickstoff und Stickstoffmonoxid umgesetzt werden.

2NO₂+C ⇒ 2NO+CO₂ (7)

NO₂+C ⇒ NO+CO (8)

2C+2NO₂ ⇒ N₂+2CO₂ (9)

Dem Partikelabscheider ist ein Haupt-SCR-Katalysator 6.2 nachgeordnet, der im Wege der selektiven katalytischen Reduktion die im Abgas vorhandenen Stickoxide in Stickstoff und Wasserdampf überführt. Zur Vermeidung von Ammoniakschlupf ist der SCR-Katalysator 6.1 in seinem stromab gelegenen Bereich mit einem einen NH₃-Oxidationskatalysator 7.1 ausbildenden Aktivmaterial beschichtet.

Durch die Anordnung eines Partikelabscheiders oder Partikelfilters im Abgastrakt gelingt zusätzlich zur Reduktion der NO_{X}-Emissionen eine Verminderung der Partikelemissionen.

Die vorstehend beschriebenen Ausführungen lassen sich selbstverständlich mit dem Fachmann zugänglichem Fachwissen auf vielfältige Weise ausgestalten, ohne den grundlegenden erfinderischen Gedanken zu verlassen, den beschriebenen Ausführungsformen kommt somit nur Beispielcharakter zu.

## Patentansprüche

1. Verfahren zur Anhebung des Stickstoffdioxidanteils im Abgas einer Brennkraftmaschine, wobei
der Abgasstrom (16) in wenigstens zwei gleichzeitig parallel durchströmte Abgasteilströme aufgeteilt wird,
der erste Abgasteilstrom (10, 10.1) über wenigstens einen NO-Oxidationskatalysator (4.1) zur Oxidation von Stickstoffmonoxid geleitet wird,
der zweite Abgasteilstrom (11, 11.1) über wenigstens einen eine selektive katalytische Reduktion von Stickoxiden mit Hilfe von Ammoniak und/oder ammoniakabspaltenden Reduktionsmitteln bewirkenden Teilstrom-SCR-Katalysator (6.1) geleitet wird,
eine Zumessung des Ammoniaks und/oder des Reduktionsmittels in den zweiten Abgasteilstrom (11, 11.1) und stromauf des Teilstrom-SCR-Katalysators (6.1) erfolgt,
die beiden Teilströme (10, 10.1) und (11, 11.1) stromab des NO-Oxidationskatalysator (4.1) und stromab des Teilstrom-SCR-Katalysators (6.1) zusammengeführt werden, und
stromab zur Zusammenführung der Abgasteilströme (10, 10.1, 11, 11.1) im Abgasstrom (16) noch wenigstens ein Abgasnachbehandlungssystem angeordnet ist, das im Abgas enthaltene Stickoxide in Stickstoff und Wasser und/oder im Abgas enthaltene Rußpartikel in Kohlendioxid umwandelt.

2. Verfahren nach Anspruch 1, **dadurch gekennzeichnet, dass** das Abgasnachbehandlungssystem wenigstens einen Katalysator zur selektiven katalytischen Reduktion von Stickoxiden mit Hilfe von Ammoniak und/oder einen NO-Speicherkatalysator und/oder einen Partikelfilter und/oder einen Partikelabscheider umfasst.

3. Verfahren nach einem der vorhergehenden Ansprüche, **dadurch gekennzeichnet, dass** der zweite Abgasteilstrom (11.1), in den über die Düse (2.1) mittels einer Zumesseinrichtung (9) Ammoniak und/oder ammoniakabspaltendes Reduktionsmittel zugegeben wird und in dem stromab zur Zuführstelle der Teilstrom-SCR-Katalysator (6.1) angeordnet ist, stromauf einer Abgasturbine (14) eines Abgasturboladers (13) dem Abgasstrom entnommen wird und dass der erste Abgasteilstrom (10.1) über die Abgasturbine (14) eines Abgasturboladers (13) und den diesem nachgeordneten NO-Oxidationskatalysators (4.1) geführt ist und dass die Zusammenführung der Abgasteilströme (10.1, 11.1) stromab zum Teilstrom-SCR-Katalysator (6.1) und stromab zum NO-Oxidationskatalysators (4.1) erfolgt.

4. Verfahren nach einem der vorhergehenden Ansprüche, **dadurch gekennzeichnet, dass** stromab der Zuführstelle für das ammoniakabspaltende Reduktionsmittel und stromauf des Teilstrom-SCR-Katalysators (6.1) ein Zersetzungs- und/oder Hydrolysekatalysator (3.1) zur Freisetzung von Ammoniak angeordnet ist.

5. Verfahren nach einem der vorhergehenden Ansprüche, **dadurch gekennzeichnet, dass** stromab des Teilstrom-SCR-Katalysators (6.1) und stromauf eines eine weitere selektive katalytische Reduktion bewirkenden Haupt-SCR-Katalysators (6), der stromab zur Zusammenführung der Abgasteilströme (10, 10.1, 11, 11.1) angeordnet ist, eine weitere Zuführstelle für Ammoniak und/oder ammonikabspaltende Reduktionsmittel angeordnet ist und die Zuführung des Ammoniak und/oder des ammonikabspaltenden Reduktionsmittels mittels einer weiteren Düse (2.2) und einer diese mit Ammoniak und/oder mit ammonikabspaltenden Reduktionsmitteln versorgenden Zumesseinrichtung (9), gesteuert durch eine Motorsteuereinheit so erfolgt, dass der stromab der Zusammenführung der Abgasteilströme (10, 10.1, 11, 11.1) im Abgas befindliche Stickoxidanteil in Stickstoff und Wasser übergeführt wird.

6. Verfahren nach einem der vorhergehenden Ansprüche, **dadurch gekennzeichnet, dass** der Teilstrom-SCR-Katalysators (6.1) und der Haupt-SCR-Katalysators (6) in Bezug auf die eingesetzten Aktivkomponenten und/oder deren Konzentration unterschiedlich sind.

7. Verfahren nach einem der Ansprüche 1 bis 6, **dadurch gekennzeichnet, dass** dem Haupt-SCR-Katalysator (6) ein Ammoniaksperrkatalysator (14) nachgeordnet ist, der im Haupt-SCR-Katalysator (6) nicht verbrauchten überschüssigen Ammoniak in Stickstoff überführt.

8. Verfahren nach einem der Ansprüchen 1 oder 5, **dadurch gekennzeichnet, dass** der Teilstrom-SCR-Katalysatoren (6.1) und/oder der Haut-SCR-Katalysator (6) als Aktivkomponente Vanadium und/oder Vanadiumpentoxid und/oder Titandioxid und/oder Wolframoxid und/oder kupferhaltige Zeolithe und/oder eisenhaltige Zeolithe und/oder kobalthaltige Zeolithe enthalten.

9. Verfahren nach einem der Ansprüche 1 bis 6, **dadurch gekennzeichnet, dass** der NO-Oxidationskatalysator (4.1) als Aktivkomponenten Platin und/oder Zeolithe enthält.

10. Verfahren nach Anspruch 4, **dadurch gekennzeichnet, dass** der Zersetzungs- und/oder Hydrolysekatalysator (3.1) als Aktivkomponente Titan und/oder Silizium und/oder Vanadium und/oder Wolfram und/oder deren Oxide und/oder Zeolithe enthält.

## Claims

1. A method for increasing the nitrogen dioxide fraction in the exhaust gas of an internal combustion engine, wherein
the exhaust gas stream (16) is divided into at least two exhaust gas substreams flowed through simultaneously in parallel,
the first exhaust gas substream (10, 10.1) is directed via at least one NO oxidation catalyst (4.1) for the oxidation of nitrogen monoxide,
the second exhaust gas substream (11, 11.1) is directed via at least one substream SCR catalyst (6.1), which brings about a selective catalytic reduction of nitrogen oxides with the aid of ammonia and/or ammonia-separating reducing agents,
metered amounts of the ammonia and/or the reducing agent are introduced into the second exhaust gas substream (11, 11.1) and upstream of the substream SCR catalyst (6.1),
the two substreams (10, 10.1) and (11, 11.1) are made to converge downstream of the NO oxidation catalyst (4.1) and downstream of the substream SCR catalyst (6.1), and
also arranged in the exhaust gas stream (16), downstream of the convergence of the exhaust gas substreams (10, 10.1, 11, 11.1), is at least one exhaust gas aftertreatment system, which converts nitrogen oxides contained in the exhaust gas into nitrogen and water and/or carbon particulates contained in the exhaust gas into carbon dioxide.

2. The method according to Claim 1, **characterized in that** the exhaust gas aftertreatment system comprises at least one catalyst for the selective catalytic reduction of nitrogen oxides with the aid of ammonia and/or an NO adsorption catalyst and/or a particle filter and/or a particle separator.

3. The method according to one of the preceding claims, **characterized in that** the second exhaust gas substream (11.1), into which ammonia and/or ammonia-separating reducing agent is fed via the nozzle (2.1) by means of a metering device (9) and in which the substream SCR catalyst (6.1) is arranged downstream of the feeding point, is removed from the exhaust gas stream upstream of an exhaust turbine (14) of an exhaust turbocharger (13) and **in that** the first exhaust gas substream (10.1) is passed via the exhaust turbine (14) of an exhaust turbocharger (13) and the NO oxidation catalyst (4.1) arranged thereafter and **in that** the convergence of the exhaust gas substreams (10.1, 11.1) takes place downstream of the substream SCR catalyst (6.1) and downstream of the NO oxidation catalyst (4.1).

4. The method according to one of the preceding claims, **characterized in that** a decomposition and/or hydrolysis catalyst (3.1) for releasing ammonia is arranged downstream of the feeding point for the ammonia-separating reducing agent and upstream of the substream SCR catalyst (6.1).

5. The method according to one of the preceding claims, **characterized in that** a further feeding point for ammonia and/or ammonia-separating reducing agent is arranged downstream of the substream SCR catalyst (6.1) and upstream of a main SCR catalyst (6.1), which brings about a further selective catalytic reduction and is arranged downstream of the convergence of the exhaust gas substreams (10, 10.1, 11, 11.1), and the feeding of the ammonia and/or of the ammonia-separating reducing agent by means of a further nozzle (2.2) and a metering device (9), which supplies the latter with ammonia and/or with ammonia-separating reducing agents, is performed under the control of a motor control unit in such a way that the nitrogen oxide fraction that is in the exhaust gas downstream of the convergence of the exhaust gas substreams (10, 10.1, 11, 11.1) is converted into nitrogen and water.

6. The method according to one of the preceding claims, **characterized in that** the substream SCR catalyst (6.1) and the main SCR catalyst (6) are different with respect to the active components used and/or their concentration.

7. The method according to one of Claims 1 to 6, **characterized in that** arranged after the main SCR catalyst (6) is an ammonia slip catalyst (14), which converts excess ammonia that has not been spent in the main SCR catalyst (6) into nitrogen.

8. The method according to either of Claims 1 and 5, **characterized in that** the substream SCR catalyst (6.1) and/or the main SCR catalyst (6) contain as an active component vanadium and/or vanadium pentoxide and/or titanium dioxide and/or tungsten oxide and or copper-containing zeolites and/or iron-containing zeolites and/or cobalt-containing zeolites.

9. The method according to one of Claims 1 to 6, **characterized in that** the NO oxidation catalyst (4.1) contains as active components platinum and or zeolites.

10. The method according to Claim 4, **characterized in that** the decomposition and/or hydrolysis catalyst (3.1) contains as an active component titanium and/or silicon and/or vanadium and/or tungsten and/or their oxides and/or zeolites.

## Revendications

1. Procédé pour augmenter la proportion de dioxyde d'azote dans le gaz d'échappement d'un moteur à combustion interne,
le flux de gaz d'échappement (16) étant divisé en au moins deux flux partiels de gaz d'échappement parcourus simultanément et parallèlement,
le premier flux partiel de gaz d'échappement (10, 10.1) étant guidé à travers au moins un catalyseur d'oxydation de NO (4.1) pour l'oxydation du monoxyde d'azote,
le deuxième flux partiel de gaz d'échappement (11, 11.1) étant guidé à travers au moins un catalyseur SCR à flux partiel (6.1) provoquant une réduction catalytique sélective d'oxydes d'azote à l'aide d'ammoniaque et/ou d'agent réducteur de séparation d'ammoniaque,
un dosage de l'ammoniaque et/ou de l'agent réducteur se produisant dans le deuxième flux partiel de gaz d'échappement (11, 11.1) et en amont du catalyseur SCR à flux partiel (6.1),
les deux flux partiels (10, 10.1) et (11, 11.1) étant réunis en aval du catalyseur d'oxydation de NO (4.1) et en aval du catalyseur SCR à flux partiel (6.1), et
en aval de la convergence des flux partiels de gaz d'échappement (10, 10.1, 11, 11.1) dans le flux de gaz d'échappement (16) étant disposé encore au moins un système de post-traitement de gaz d'échappement qui convertit les oxydes d'azote contenus dans le gaz d'échappement en azote et en eau et/ou les particules de suie contenues dans le gaz d'échappement en dioxyde de carbone.

2. Procédé selon la revendication 1, **caractérisé en ce que** le système de post-traitement de gaz d'échappement comprend au moins un catalyseur pour la réduction catalytique sélective d'oxydes d'azote à l'aide d'ammoniaque et/ou un catalyseur d'accumulation de NO et/ou un filtre à particules et/ou un séparateur de particules.

3. Procédé selon l'une quelconque des revendications précédentes, **caractérisé en ce que** le deuxième flux partiel de gaz d'échappement (11.1), dans lequel de l'ammoniaque et/ou un agent réducteur séparant l'ammoniaque sont ajoutés par le biais de la buse (2.1) au moyen d'un dispositif de dosage (9) et dans lequel est disposé, en aval du point d'alimentation, le catalyseur SCR à flux partiel (6.1), est prélevé du flux de gaz d'échappement en amont d'une turbine de gaz d'échappement (14) d'un turbocompresseur à gaz d'échappement (13) et **en ce que** le premier flux partiel de gaz d'échappement (10.1) est guidé par le biais de la turbine de gaz d'échappement (14) d'un turbocompresseur à gaz d'échappement (13) et du catalyseur d'oxydation de NO disposé après celui-ci (4.1), et **en ce que** la convergence des flux partiels de gaz d'échappement (10.1, 11.1) s'effectue en aval du catalyseur SCR à flux partiel (6.1) et en aval du catalyseur d'oxydation de NO (4.1).

4. Procédé selon l'une quelconque des revendications précédentes, **caractérisé en ce qu'**en aval du point d'alimentation pour l'agent réducteur séparant l'ammoniaque et en amont du catalyseur SCR à flux partiel (6.1) est disposé un catalyseur de décomposition et/ou d'hydrolyse (3.1) pour libérer de l'ammoniaque.

5. Procédé selon l'une quelconque des revendications précédentes, **caractérisé en ce qu'**en aval du catalyseur SCR à flux partiel (6.1) et en amont d'un catalyseur SCR principal (6) provoquant une réduction catalytique sélective supplémentaire, qui est disposé en aval de la convergence des flux partiels de gaz d'échappement (10, 10.1, 11, 11.1), est disposé un point d'alimentation supplémentaire pour l'ammoniaque et/ou pour l'agent réducteur séparant l'ammoniaque et l'alimentation en ammoniaque et/ou en agent réducteur séparant l'ammoniaque, commandée par une unité de commande à moteur, s'effectue au moyen d'une buse supplémentaire (2.2) et d'un dispositif de dosage (9) alimentant celle-ci en ammoniaque et/ou en agent réducteur séparant l'ammoniaque, de telle sorte que la proportion d'oxydes d'azote se trouvant dans le gaz d'échappement en aval de la convergence des flux partiels de gaz d'échappement (10, 10.1, 11, 11.1) soit convertie en azote et en eau.

6. Procédé selon l'une quelconque des revendications précédentes, **caractérisé en ce que** le catalyseur SCR à flux partiel (6.1) et le catalyseur SCR principal (6) sont différents en termes des composants actifs utilisés et/ou de leur concentration.

7. Procédé selon l'une quelconque des revendications 1 à 6, **caractérisé en ce qu'**un catalyseur de blocage d'ammoniaque (14) est placé en aval du catalyseur SCR principal (6), lequel convertit l'ammoniaque en excès non consommé dans le catalyseur SCR principal (6) en azote.

8. Procédé selon l'une quelconque des revendications 1 ou 5, **caractérisé en ce que** les catalyseurs SCR à flux partiel (6.1) et/ou le catalyseur SCR principal (6) contiennent en tant que composant actif du vanadium et/ou du pentoxyde de vanadium et/ou de l'oxyde de titane et/ou de l'oxyde de tungstène et/ou des zéolithes contenant du cuivre et/ou des zéolithes contenant du fer et/ou des zéolithes contenant du cobalt.

9. Procédé selon l'une quelconque des revendications 1 à 6, **caractérisé en ce que** le catalyseur d'oxydation de NO (4.1) contient en tant que composant actif du platine et/ou des zéolithes.

10. Procédé selon la revendication 4, **caractérisé en ce que** le catalyseur de décomposition et/ou d'hydrolyse (3.1) contient en tant que composant actif du titane et/ou du silicium et/ou du vanadium et/ou du tungstène et/ou leurs oxydes et/ou des zéolithes.
